# EUROPÄISCHE PATENTSCHRIFT

(11) **EP 0 472 894 B1**
(45) Veröffentlichungstag und Bekanntmachung des Hinweises auf die Patenterteilung: **08.11.1995**
(21) Anmeldenummer: 91112165.5
(22) Anmeldetag: 20.07.1991
(51) Int. Cl.: B23Q 3/12

(54) **Kupplungseinrichtung zum Ankuppeln eines Werkzeugträgers für Rotationswerkzeuge an eine Antriebseinhet einer Bearbeitungsmaschine**
Clutch appliance for connecting a tool holder for revolving tools to a driving unit of a processing machine
Dispositif d'accouplement pour atteler un porte-outil pour outils rotatifs à un mécanisme de commande d'une machine d'usinage

(30) Priorität: 25.07.1990 DE 4023580
(43) Veröffentlichungstag der Anmeldung: 04.03.1992
(73) Patentinhaber: Gebr. Heller Maschinenfabrik GmbH, D-72622 Nürtingen (DE)
(72) Erfinder: Schweizer, Ernst, W-7440 Nürtingen (DE); Kalestra, Horst, W-7441 Neckartenzlingen (DE)
(74) Vertreter: Jackisch-Kohl, Anna-Katharina

(56) Entgegenhaltungen:
- DE-A- 3 516 542
- DE-A- 3 824 462
- DE-A- 3 904 631

## Beschreibung

Die Erfindung betrifft eine Kupplungseinrichtung zum Ankuppeln eines Werkzeugträgers für Rotationswerkzeuge an eine Antriebseinheit einer Bearbeitungsmaschine nach dem Oberbegriff des Anspruches 1.

Bei Bearbeitungsmaschinen sind Antriebseinheiten bekannt (vgl. z.B. DIN 2079, August 1987), an die Werkzeugträger angekuppelt werden können. Die Antriebsspindel der Antriebseinheit ist mit Nutensteinen als Mitnehmer versehen, die paßgenau in entsprechende Vertiefungen in der Abtriebsspindel des Werkzeugträgers eingreifen und so beide Spindeln drehfest miteinander verbinden. Mit solchen paßgenauen Nuten und Nutensteinen ist jedoch ein ständiges automatisches Kuppeln nicht möglich, so daß solche Kupplungseinrichtungen für solche Bearbeitungsmaschinen nicht geeignet sind, bei denen ständig Werkzeugträger automatisch an die Antriebseinheit gekuppelt werden müssen.

Es sind auch zustellbare Kupplungen bekannt (vgl. z.B. Tochtermann/Bodenstein "Konstruktionselemente des Maschinenbaues", Springer-Verlag, 8. Auflage, 1969, Zweiter Teil, S. 112, 113), die mit konischen Mitnahmeflächen in axialer Richtung versehen sind. Über diese konischen Mitnahmeflächen erfolgt bei Zustellung der Kupplung die Kupplungsverbindung zwischen der Antriebs- und der Abtriebsspindel. Solche zustellbaren Kupplungen weisen jedoch ein Bewegungsspiel auf, so daß ein spielfreies Kuppeln nicht gewährleistet ist.

Der Erfindung liegt die Aufgabe zugrunde, die gattungsgemäße Kupplungseinrichtung so auszubilden, daß mit ihr ein ständiges automatisches und spielfreies Kuppeln möglich ist.

Diese Aufgabe wird bei der gattungsgemäßen Kupplungseinrichtung erfindungsgemäß mit den kennzeichnenden Merkmalen des Anspruches 1 gelöst.

Bei der erfindungsgemäßen Kupplungseinrichtung ist die Vertiefung der Abtriebsspindel breiter als der Mitnehmer der Antriebsspindel der Antriebseinheit. Dadurch kann beim Ansetzen des Werkzeugträgers bei gerichteter Abtriebs- und Antriebsspindel der Mitnehmer berührungslos in die Vertiefung der Abtriebsspindel gelangen. Auf diese Weise ist ein verschleißfreies Kuppeln möglich. Bei diesem Einfahrvorgang sind die Achsen der Abtriebsspindel und der Antriebsspindel versetzt zueinander. Hierbei wird der Werkzeugträger und damit die Abtriebsspindel immer um einige Zehntel mm tiefer der Antriebseinheit zugeführt. Nachdem der Werkzeugträger an die Antriebseinheit angesetzt ist, wird dieser Achsversatz durch entsprechende Positioniermittel (Halte- und Positionierbolzen sowie Gegenhalter) eliminiert, so daß die Achsen der Antriebs- und der Abtriebsspindel wieder fluchtend zueinander liegen. Der Achsversatz ist gleich dem Spiel, das der Mitnehmer der Antriebsspindel von der in Drehrichtung vorderen Seitenwand der Vertiefung der Abtriebsspindel hat. Wenn darum der Achsversatz eliminiert wird, liegt der Mitnehmer spielfrei an dieser in Drehrichtung der Antriebsspindel vorderen Seitenwand der Vertiefung an. Durch die Beseitigung des Achsversatzes ist somit sichergestellt, daß in der Kupplungsstellung eine spielfreie Verbindung zwischen der Antriebs- und der Abtriebsspindel besteht.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung und in Draufsicht den Kupplungsbereich zwischen einer Antriebseinheit einer Bearbeitungsmaschine und einem Werkzeugträger,
- Fig. 2: einen Schnitt längs der Linie II-II in Fig. 1, wobei die Antriebsspindel der Antriebseinheit und die Abtriebsspindel des Werkzeugträgers in Kuppelstellung sind,
- Fig. 3: teils im Schnitt und teils in Ansicht einen Teil der Kupplungsverbindung zwischen der Antriebsspindel der Antriebseinheit und der Abtriebsspindel des Werkzeugträgers in der Einfahrstellung,
- Fig. 4: die Kupplungsstelle gemäß Fig. 3 in der Kuppelstellung gemäß Fig. 2.

Die Figuren der Zeichnung zeigen in schematischer Darstellung nur einen Teil einer Antriebseinheit 1 einer Bearbeitungsmaschine. Die Antriebseinheit 1 hat eine Antriebsspindel 2, die mit einer Abtriebsspindel 3 eines Werkzeugträgers 4 für Rotationswerkzeuge gekuppelt werden kann. Der Werkzeugträger 4 ist beispielsweise ein Fräs- bzw. Bohrkopf, dessen (nicht dargestelltes) Werkzeug in bekannter Weise über die Antriebsspindel 2 und die Abtriebsspindel 3 angetrieben wird. Die Antriebseinheit 1 ist außerdem in bekannter Weise mit Positionier- und Haltebolzen 5 versehen, die ebenfalls in bekannter Weise mit Gegenhaltern 6 des Werkzeugträgers 4 zusammenwirken.

Die Antriebseinheit 1 und der Werkzeugträger 4 sind so ausgebildet, daß der Werkzeugträger gewechselt werden kann. Um diesen Wechselvorgang einfach durchführen und insbesondere die Antriebsspindel 2 mit der Abtriebsspindel 3 verschleißfrei kuppeln zu können, sind die beiden Spindeln 2 und 3 so ausgebildet, daß sie beim Ankuppeln bzw. Entkuppeln berührungsfrei mit in bekannter Weise gerichteter An- und Abtriebsspindel zusammengefahren bzw. auseinandergefahren werden können. Die Abtriebsspindel 3 des Werkzeugträgers 4 hat in ihrer Stirnseite eine diametral verlaufende, Seitenwände 32, 33 aufweisende Nut 7, in die zwei Mitnehmer 8 und 9 der Antriebsspindel 2 eingreifen. Der Mitnehmer 9 ist ein herkömmlicher Nutenstein, der vorzugsweise auf die Stirnseite der Antriebsspindel 2 geschraubt ist. Der andere Mitnehmer 8, der mit Abstand zum Mitnehmer 9 angeordnet ist, ist ebenfalls vorzugsweise auf die Stirnseite der Antriebsspindel 2 geschraubt. Die beiden Mitnehmer 8 und 9 haben gleichen Umriß, und ihre Breite 10 ist kleiner als die Breite 11 der Nut 7 der Abtriebsspindel 3.

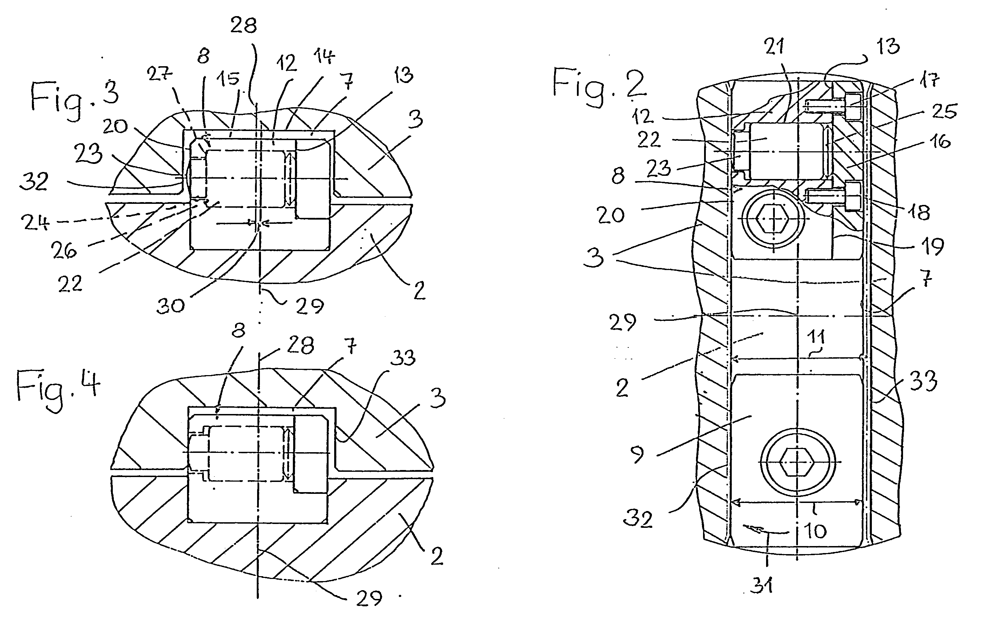

Der Mitnehmer 8 hat einen Grundkörper 12, der an seiner einen Längsseite mit einer Vertiefung 13 versehen ist. Sie erstreckt sich über die Länge des Grundkörpers 12 und ist zu der dem Nutboden 14 zugewandten Seite 15 des Grundkörpers 12 (Fig. 3) offen. Die Vertiefung 13 des Grundkörpers 12 wird durch ein Widerlager 16 ausgefüllt, das mit Schrauben 17, 18 lösbar am Grundkörper 12 befestigt ist. Die Köpfe der Schrauben 17, 18 liegen versenkt im Widerlager 16, so daß sie nicht über den Mitnehmer 8 überstehen.

Das Widerlager 16 liegt an einer senkrecht zur ebenen Seite 15 des Mitnehmers 8 liegenden Stirnseite 19 des Grundkörpers 12 flächig an. Zwischen dieser Stirnseite 19 und der dazu parallelen Längsseite 20 des Grundkörpers 12 erstreckt sich eine Ausnehmung 21, in der ein Gegenhalter 22 untergebracht ist. Er hat an seiner vom Widerlager 16 abgewandten Stirnseite einen verjüngten Ansatz 23, mit dem er bei nicht gekuppeltem Werkzeugträger 4 aus einem im Durchmesser verringerten Ende 24 der Ausnehmung 21 über die Längsseite 20 ragt (Fig. 3). An dem dem Ansatz 23 gegenüberliegenden Ende greift am Gegenhalter 22 wenigstens eine Druckfeder 25 an, durch welche der Gegenhalter 22 derart belastet ist, daß er sich bei entkuppeltem Werkzeugträger 4 so weit in der Ausnehmung 21 verschiebt, daß er mit seiner den Ansatz 23 aufweisenden Stirnseite 26 (Fig. 3) an einer radialen Schulterfläche 27 in der die Ausnehmung 21 begrenzenden Wand anliegt (Fig. 3). Die Druckfeder 25 stützt sich am Widerlager 16 ab. Bevorzugt wird die Druckfeder 25 durch zwei gegensinnig angeordnete Tellerfedern gebildet. Innerhalb der Ausnehmung 21 ist der Gegenhalter 22 spielfrei verschiebbar, so daß er einwandfrei gegenüber dem Mitnehmer 8 ausgerichtet ist.

Die beiden Mitnehmer 8 und 9 liegen, wie Fig. 2 entnommen werden kann, in Längsrichtung der Nut 7 der Abtriebsspindel 3 mit Abstand fluchtend hintereinander zu beiden Seiten der Achse 29 der Antriebsspindel 2.

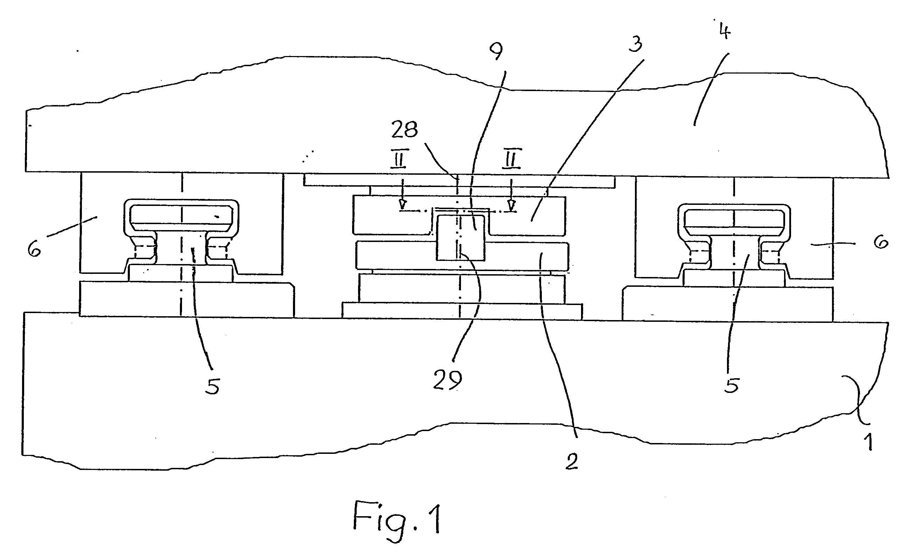

Beim Anschließen des Werkzeugträgers 4 an die Antriebseinheit 1 ist die Achse 28 der Abtriebsspindel 3 gegenüber der Achse 29 der Antriebsspindel 2 geringfügig versetzt (Fig. 3). Dieser Versatz 30 ist so groß, daß beim Zusammenfahren des Werkzeugträgers 4 und der Antriebseinheit 1 die Mitnehmer 8 und 9 der Antriebsspindel 2 berührungslos in die Nut 7 der Abtriebsspindel 3 gelangen. Somit ist ein verschleißfreies Kuppeln des Werkzeugträgers 4 und der Antriebseinheit 1 gewährleistet. Die Haltebolzen 5 und die Gegenhalter 6 an der Antriebseinheit 1 und am Werkzeugträger 4 sind so ausgebildet und angeordnet, daß sie das berührungslose Kuppeln ermöglichen (Fig. 1).

Anschließend wird der Werkzeugträger 4 in bekannter Weise mittels der Gegenhalter 6 und der Haltebolzen 5 an der Antriebseinheit 1 verspannt. Bei diesem Spannvorgang wird der Versatz 30 zwischen den beiden Achsen 28 und 29 der Abtriebsspindel 3 und der Antriebsspindel 2 eliminiert, so daß beide Achsen zusammenfallen (Fig. 4). In der Spannposition sind somit die beiden Spindeln 2 und 3 koaxial zueinander angeordnet (Fig. 2 und 4). Beim Spannvorgang wird der Werkzeugträger 4 und damit die Abtriebsspindel 3 relativ zur Antriebseinheit 1 und damit zur Antriebsspindel 2 so bewegt, daß die beiden Mitnehmer 8, 9 der Antriebsspindel 2 an der Seitenwand 32 der Nut 7 der Anlage kommen (Fig. 2 und 4). Hierbei kommt der über die Längsseite 20 des Mitnehmers 8 ragende Ansatz 23 an der Seitenwand 32 zur Anlage und wird hierbei nach innen geschoben. Der Gegenhalter 22 wird dadurch gegen die Kraft der Tellerfedern 25 zurückgeschoben.

Infolge des federbelasteten Gegenhalters 22 übernimmt der Mitnehmer 8 den Spielausgleich auf der entlasteten Seite der Kupplungsverbindung. Dadurch wird bei wechselnden Bearbeitungskräften das auftretende Überholmoment aufgefangen. Sollte beispielsweise das Werkzeug des Werkzeugträgers 4 außer Eingriff mit dem zu bearbeitenden Werkstück kommen, verhindert der federbelastete Gegenhalter 22, daß die Abtriebsspindel 3 infolge der fehlenden Gegenkraft schlagartig durch die Antriebsspindel 2 beschleunigt wird.

Beim beschriebenen Ausführungsbeispiel wird der Achsversatz 30 beim Spannvorgang des Werkzeugträgers 4 an der Antriebseinheit 1 eliminiert. Die hierdurch erreichte koaxiale bzw. konzentrische Lage der beiden Spindeln 2 und 3 kann manuell oder auch automatisch hergestellt werden.

Durch die beschriebene Ausbildung wird eine torsionssteife und spielfreie Kupplung zwischen dem Werkzeugträger 4 und der Antriebseinheit 1 erreicht. Infolge des federbelasteten Gegenhalters 22 tritt kein Überholmoment auf, weil durch den Gegenhalter 22 auf der entlasteten Seite der Kupplungsverbindung ein Spielausgleich vorhanden ist. Infolge der torsionssteifen und spielfreien Kupplung wird die Bruchgefahr für stoßempfindliche Werkzeuge, die beispielsweise polykristallinen Diamant aufweisen, erheblich verringert. Da die beiden Spindeln 2 und 3 berührungslos zusammengefügt werden, tritt beim Kuppeln kein Verschleiß auf. Zudem ist ein schneller Kupplungsvorgang gewährleistet. Die mit einem solchen Kupplungssystem ausgestattete Bearbeitungsmaschine erlaubt damit einen schnellen Werkzeugwechsel. Die Kupplung muß infolge der beschriebenen Ausbildung nicht zustellbar sein, so daß sich auch geringe Herstellungskosten ergeben.

Beim Entkuppelvorgang, d.h. beim Lösen der Positionier- und Haltebolzen 5 von den Gegenhaltern 6, senkt sich der Werkzeugträger 4 um einen vorbestimmten Betrag ab bis die Stellung von Fig. 3 mit dem Achsversatz 30 erreicht ist. Dann können die beiden Spindeln 2 und 3 wieder berührungslos auseinandergefahren werden.

## Patentansprüche

1. Kupplungseinrichtung zum Ankuppeln eines Werkzeugträgers (4) für Rotationswerkzeuge an eine Antriebseinheit (1) einer Bearbeitungsmaschine mittels Halte- und Positioniermitteln (5, 6) an der Antriebseinheit (1) und dem Werkzeugträger (4), wobei die Antriebseinheit (1) eine Antriebsspindel (2) mit einer Achse (29) und mindestens einem Mitnehmer (8, 9) aufweist, der in Kuppelstellung spielfrei in eine Vertiefung (7) einer Abtriebsspindel (3) des Werkzeugträgers (4) mit einer Achse (28) eingreift, dadurch gekennzeichnet, daß die Vertiefung (7) in der Abtriebsspindel (3) in Drehrichtung (31) breiter ist als der Mitnehmer (8, 9) der Antriebsspindel (2), und daß die Halte- und Positioniermittel (5, 6) so ausgebildet und angeordnet sind, daß die Achse (28) der Abtriebsspindel (3) zumindest in der Einfahrstellung gegenüber der Achse (29) der Antriebsspindel (2) in Drehrichtung (31) einen Versatz (30) aufweist, und daß die Abtriebsspindel (3) gegenüber der Antriebsspindel (2) beim Spannvorgang so weit bewegt wird, daß der Mitnehmer (8, 9) an der in Drehrichtung (31) der Abtriebsspindel (3) vorderen Seitenwand (32) der Vertiefung (7) anliegt und der Versatz (30) in der Kuppelstellung dadurch eliminiert ist.

2. Kupplungseinrichtung nach Anspruch 1,
dadurch gekennzeichnet, daß die Antriebsspindel (2) einen weiteren Mitnehmer (8; 9) aufweist, der gleiche Querschnittsform wie der andere Mitnehmer (9; 8) hat.

3. Kupplungseinrichtung nach Anspruch 2,
dadurch gekennzeichnet, daß die Vertiefung (7) der Abtriebsspindel (3) eine in ihrer Stirnseite diametral verlaufende Nut ist, in die beide Mitnehmer (8; 9) eingreifen.

4. Kupplungseinrichtung nach Anspruch 2 oder 3,
dadurch gekennzeichnet, daß die beiden Mitnehmer (8; 9), in Längsrichtung der Vertiefung (7) gesehen, auf gleicher Höhe beiderseits der Achse (29) der Antriebsspindel (2) liegen.

5. Kupplungseinrichtung nach einem der Ansprüche 2 bis 4,
dadurch gekennzeichnet, daß der eine Mitnehmer (9) in Kuppelstellung an der in Drehrichtung (31) der Abtriebsspindel (3) vorderen Seitenwand (32) der Vertiefung (7) und der andere Mitnehmer (8) an der in Drehrichtung (31) der Abtriebsspindel (3) rückwärtigen Seitenwand (32) der Vertiefung (7) anliegen.

6. Kupplungseinrichtung nach einem der Ansprüche 2 bis 5,
dadurch gekennzeichnet, daß der weitere Mitnehmer (8) einen druckbelasteten Gegenhalter (22) aufweist, der in Kuppelstellung kraftschlüssig an der rückwärtigen Seitenwand (32) der Vertiefung (7) anliegt.

7. Kupplungseinrichtung nach Anspruch 6,
dadurch gekennzeichnet, daß der Gegenhalter (22) federbelastet ist.

8. Kupplungseinrichtung nach Anspruch 6 oder 7,
dadurch gekennzeichnet, daß der Gegenhalter (22) in der Ein- und Ausfahrstellung der Abtriebsspindel (3) über die der vorderen Seitenwand (32) der Vertiefung (7) zugewandte Seite des Mitnehmers (8) ragt.

9. Kupplungseinrichtung nach Anspruch 8,
dadurch gekennzeichnet, daß der überstehende Gegenhalter (22) in der Ein- und Ausfahrstellung Abstand von der vorderen Seitenwand (32) der Vertiefung (7) hat.

10. Kupplungseinrichtung nach einem der Ansprüche 6 bis 9,
dadurch gekennzeichnet, daß der weitere Mitnehmer (8) ein Widerlager (16) für den Gegenhalter (22) hat.

11. Kupplungseinrichtung nach Anspruch 10,
dadurch gekennzeichnet, daß der Gegenhalter (22) unter Zwischenlage eines Tellerfederpaketes (25) in der Kuppelstellung am Widerlager (16) abgestützt ist.

## Claims

1. A coupling device for connecting a tool holder (4) for rotary tools to a drive unit (1) of a processing machine by means of holding and positioning means (5, 6) on the drive unit (1) and the tool holder (4), wherein the drive unit (1) has a drive spindle (2) having an axis (29) and at least one carrier (8, 9) which, in the coupled position, engages, free from play, in a recess (7) of an output spindle (3) of the tool holder (4) having an axis (28), characterised in that the recess (7) in the output spindle (3) is wider in the direction of rotation (31) than the carrier (8, 9) of the drive spindle (2), and in that the holding and positioning means (5, 6) are formed and arranged in such a manner that, in the direction of rotation (31), the axis (28) of the output spindle (3) has an offset (30) relative to the axis (29) of the drive spindle (2) at least in the advancing position, and in that the output spindle (3) is moved towards the drive spindle (2) during the clamping process until the carrier (8, 9) rests against the forward side wall (32) - seen in the direction of rotation (31) of the output spindle (3) - of the recess (7) and the offset (30) is thereby eliminated in the coupled position.

2. A coupling device according to claim 1, characterised in that the drive spindle (2) has a further carrier (8, 9) having the same cross-sectional form as the other carrier (9, 8).

3. A coupling device according to claim 2, characterised in that the recess (7) of the output spindle (3) is a groove which extends diametrically in the surface thereof and in which the two carriers (8, 9) engage.

4. A coupling device according to claim 2 or 3, characterised in that the two carriers (8, 9), seen in the longitudinal direction of the recess (7), are located at the same height on either side of the axis (29) of the drive spindle (2).

5. A coupling device according to any one of claims 2 to 4, characterised in that, in the coupled position, one carrier (9) rests against the forward side wall (32) - seen in the direction of rotation (31) of the output spindle (3) - of the recess (7), and the other carrier (8) rests against the rearward side wall (32) - seen in the direction of rotation (31) of the output spindle (3) - of the recess (7).

6. A coupling device according to any one of claims 2 to 5, characterised in that the further carrier (8) has a pressure-loaded counterstay (22) resting non-positively against the rearward side wall (32) of the recess (7) in the coupled position.

7. A coupling device according to claim 6, characterised in that the counterstay (22) is spring-loaded.

8. A coupling device according to claim 6 or 7, characterised in that the counterstay (22) projects beyond the side of the carrier (8) facing the forward side wall (32) of the recess (7) in the advancing and withdrawing positions of the output spindle (3).

9. A coupling device according to claim 8, characterised in that the projecting counterstay (22) is at a distance from the forward side wall (32) of the recess (7) in the advancing and withdrawing positions.

10. A coupling device according to any one of claims 6 to 9, characterised in that the further carrier (8) has an abutment (16) for the counterstay (22).

11. A coupling device according to claim 10, characterised in that, in the coupled position, the counterstay (22) is supported against the abutment (16) with the interposition of a disc spring set (25).

## Revendications

1. Dispositif d'accouplement pour accoupler un porte-outils (4) pour des outils en rotation sur une unité d'entraînement (1) d'une machine d'usinage à l'aide de moyens de maintien et de positionnement (5, 6) sur l'unité d'entraînement (1) et sur le porte-outils (4), l'unité d'entraînement (1) comportant une broche d'entraînement (2) avec un axe (29) et au moins un élément d'entraînement (8, 9) qui s'engage dans une position d'accouplement sans jeu dans un renfoncement (7) d'une broche menée (3) du porte-outils (4) au moyen d'un axe (28),
caractérisé en ce que le renfoncement (7) dans la broche menée (3) est plus large dans la direction de rotation (31) que l'élément d'entraînement (8, 9) de la broche d'entraînement (2), et en ce que les moyens de maintien et de positionnement (5, 6) sont réalisés et agencés de telle façon que l'axe (28) de la broche menée (3) présente au moins dans la position d'introduction un décalage (30) dans la direction de rotation (31) par rapport à l'axe (29) de la broche d'entraînement (2), et en ce que la broche menée (3) est déplacée par rapport à la broche d'entraînement (2) lors du processus de serrage, aussi loin que l'élément d'entraînement (8, 9) s'applique contre la paroi latérale avant (37) du renfoncement (7), dans la direction de rotation (31) de la broche menée (3), et que le décalage (30) est éliminé grâce à ceci dans la position d'accouplement.

2. Dispositif d'accouplement selon la revendication 1, caractérisé en ce que la broche d'entraînement (2) comporte un autre élément d'entraînement (8 ; 9) qui a en section transversale la même forme que l'autre élément d'entraînement (9 ; 8).

3. Dispositif d'accouplement selon la revendication 2, caractérisé en ce que le renfoncement (7) de la broche menée (3) est une gorge qui s'étend diamétralement dans sa face frontale, dans laquelle s'engagent les deux éléments d'entraînement (8 ; 9).

4. Dispositif d'accouplement selon l'une ou l'autre des revendications 2 et 3, caractérisé en ce que les deux éléments d'entraînement (8 ; 9) sont disposés à la même hauteur, vus dans la direction longitudinale du renfoncement (7), des deux côtés de l'axe (29) de la broche d'entraînement (2).

5. Dispositif d'accouplement selon l'une quelconque des revendications 2 à 4, caractérisé en ce que l'un des éléments d'entraînement (9) est appliqué dans la position d'accouplement contre la paroi latérale (32) du renfoncement (7) située en avant dans la direction de rotation (31) de la broche menée (3), et en ce que l'autre élément d'entraînement (8) est appliqué contre la paroi latérale (32) du renfoncement (7) située vers l'arrière dans la direction de rotation (31) de la broche menée (3).

6. Dispositif d'accouplement selon l'une quelconque des revendications 2 à 5, caractérisé en ce que l'autre élément d'entraînement (8) comporte un organe de maintien contraire (22) sollicité sous pression, qui s'applique dans la position d'accouplement en coopération de forces contre la paroi latérale arrière (32) du renfoncement (7).

7. Dispositif d'accouplement selon la revendication 6, caractérisé en ce que l'organe de maintien contraire (22) est sollicité par un ressort.

8. Dispositif d'accouplement selon l'une des revendications 6 et 7, caractérisé en ce que l'organe de maintien contraire (22) dépasse, dans la position d'introduction et de sortie de la broche menée (3), au-delà de la face de l'élément d'entraînement (8) orientée vers la paroi latérale avant (32) du renfoncement (7).

9. Dispositif d'accouplement selon la revendication 8, caractérisé en ce que l'organe de maintien contraire (22) en dépassement présente, dans la position d'introduction et de sortie, une distance par rapport à la paroi latérale avant (32) du renfoncement (7).

10. Dispositif d'accouplement selon l'une quelconque des revendications 6 à 9, caractérisé en ce que l'autre élément d'entraînement (8) comporte un appui (16) pour l'organe de maintien contraire (22).

11. Dispositif d'accouplement selon la revendication 10, caractérisé en ce que l'organe de maintien contraire (22) est supporté contre l'appui (16) avec interposition d'un empilement de rondelles élastiques (25) dans la position d'accouplement.
